# EUROPEAN PATENT APPLICATION

(11) **EP 3 783 588 A1**
(43) Date of publication of application: **24.02.2021**
(21) Application number: 19192854.8
(22) Date of filing: 21.08.2019
(51) Int. Cl.: G09B 23/24, G09B 23/26

(54) **ATOMIC ORBITAL MODEL KIT**

(71) Applicant: Technische Universität München, 80333 München (DE)
(72) Inventor:
(74) Representative: Koplin, Moritz

(57) **Abstract**

Provided is an atomic orbital model kit which comprises a spherical base **10** with an inner sphere **12,** an at least partially transparent or translucent outer sphere **14,** and a first magnetic element **18** which is slidably arranged in between the inner sphere **12** and the outer sphere **14** and a first, at least partially transparent or translucent hollow body **22** with a second magnetic element **24** which allows attaching the first hollow body 22 to the outer sphere **14** by magnetic force.

## Description

### Technical Field

The present disclosure relates to an atomic orbital model kit. In particular, the present disclosure relates to an atomic orbital model kit that allows adding hollow bodies to a spherical base, wherein the hollow bodies represent orbitals.

### Background Art

Various models which describe atomic or molecular structures have been proposed in the sciences. To explain those models in an analog setting, a physical representation may be used. Heretofore, modelling kits are available which allow building models by establishing a connection between components that represent model elements.

### Summary of Invention

The present invention provides an atomic orbital model kit which comprises a spherical base with an inner sphere, an at least partially transparent or translucent outer sphere, and a first magnetic element which is slidably arranged in between the inner sphere and the outer sphere, and a first, at least partially transparent or translucent hollow body with a second magnetic element which allows attaching the first hollow body to the outer sphere by magnetic force.

In this regard, the term "atomic orbital model kit", as used throughout the description and the claims, particularly refers to a set of components that can be attached to each other, wherein at least some of the components represent an element of the model. For example, subatomic particles may be represented by spheres, and orbitals may be represented by hollow bodies having a shape that resembles the shape of the respective orbital. Moreover, the formulation "slidably arranged", as used throughout the description and the claims, is to be construed broadly and refers to an arrangement in which the position of the first magnetic element within the spherical base is not static, but where the first magnetic element can be displaced by dragging the first magnetic element along the outer surface of the inner sphere, the inner surface of the outer sphere, and/or a surface of a guide structure between the inner sphere and the outer sphere. Furthermore, the term "magnetic element", as used throughout the description and the claims, particularly refers to an element that comprises a magnetic material and/or a ferromagnetic material.

The first hollow body may have a shape which is similar to a shape of an orbital, and hybridization may be visualized by selecting a hollow body which resembles the respective orbital. To this end, the spherical base may be provided with a magnetic element for each orbital that is to be attached to the spherical base. Moreover, a magnetic element may represent an electron and may be provided with a color (e.g., red) that highlights the magnetic element. This may allow counting the magnetic elements and determining the number of electrons of an atom based on the number of (highlighted) magnetic elements.

The kit may further comprise a core within the inner sphere, wherein the inner sphere is at least partially transparent or translucent.

This allows reducing the size of the core to gain a more realistic model without losing surface area for attaching the orbitals which would be the case if the orbitals were attached directly to the core.

The core may comprise a sphere or an accumulation of elements representing subatomic particles.

A core comprising an accumulation of elements representing protons and neutrons may make the model more realistic and hence increase the overall teaching success.

The core may comprise a first part with a first internal thread, a second part with a second internal thread, and a threaded rod which allows attaching the first part to the second part by rotating the first part relative to the second part.

By disassembling the spherical base, further magnetic elements may be added to the space between the inner sphere and the outer sphere such that the number of spherical bases which are required to model different hybridization scenarios can be reduced. Moreover, magnetic elements having a higher or lower magnetic strength can be used to model higher or lower bonding forces.

The spherical base may be dividable into a first half and a second half by rotating the halves relative to each other around an axis through a center of the spherical base.

For example, the first half and the second half may be attached to each other by screwing the first half to the second half. Notably, screwing the first half to the second half may be enabled by the first and second part being provided with internal threads (as described above), but also by providing the outer semi-spheres or the inner semi-spheres with an inner thread and an outer thread.

Alternatively, the spherical base may be dividable into a first half and a second half by pulling the halves apart.

For example, the first half (and in particular the first halfs outer semi-sphere) may be snap-fitted to the second half (and in particular to the second halfs outer semi-sphere) and the halves may be divided by disengaging a hook, bead or bump from a catch.

The spherical base may further comprise rods or bars which extend radially outward from a surface of the core and connect the core and the inner sphere and/or the spherical base may further comprise rods or bars which extend radially outward from a surface of the inner sphere and connect the inner sphere and the outer sphere.

For example, there may be three pairs of rods or bars extending from the core or the inner sphere to the outer sphere along the same axis, wherein the rods or bars of each pair are perpendicular to the rods or bars of the other pairs.

The kit may further comprise a third magnetic element which is arranged inside the inner sphere to keep the first magnetic element in place when the first hollow body is detached from the outer sphere.

I.e., the third magnetic element may abut on the inner surface of the inner sphere and exercise a magnetic force on the first magnetic element which holds the first magnetic element against the outer surface of the inner sphere.

The first hollow body may further comprise a fourth magnetic element for connecting a second, at least partially transparent or translucent hollow body to the first hollow body by magnetic force.

This may allow building a molecule comprising two or more spherical bases.

The first hollow body may be flexible.

For example, the first hollow body may be made of a bendable material. This may increase the accuracy of the model when building the molecule because processes changing the shape of an orbital can be reproduced. Moreover, stronger magnetic elements may be used for stronger connections between atoms to make the model more accurate and realistic.

A system comprising the kit may also comprise a computing device having a camera and a screen, wherein the computing device is configured to detect components of the kit that establish an atomic orbital model and display graphical elements representing the detected components on the screen.

The computing device may be configured to assign the detected components to a virtual atomic orbital model and to display the virtual atomic orbital model, wherein the virtual atomic orbital model comprises the graphical elements.

The virtual atomic orbital model may be a more accurate representation of reality regarding the position, orientation and dimension of the orbitals than the atomic orbital model.

The computing device may be configured to record video data displayed on the screen.

The recorded video data may allow a student to refresh her/his memory and thus increase the learning success.

The computing device may be configured to record audio data of a presenter handling the atomic orbital model.

This may allow providing additional information and explanations (e.g., using Augmented Reality, AR) and thus further improve the learning success.

Furthermore, the present invention provides a method of visualizing a chemical reaction by handling the atomic orbital model kit or the system. The method may comprise replacing the first hollow body with a third, at least partially transparent or translucent hollow body to visualize a chemical reaction.

It will be appreciated that the features and attendant advantages of the disclosed method may be realized by the disclosed kit/system and vice versa. Moreover, it is noted that throughout the description, features in brackets are to be regarded as optional.

### Brief Description of Drawings

The foregoing aspects and many of the attendant advantages will become more readily appreciated as the same becomes better understood by reference to the following description of embodiments, when taken in conjunction with the accompanying drawings, wherein like reference numerals refer to like parts throughout the various views, unless otherwise specified.
Fig. 1 and Fig. 1a show components of an atomic orbital model kit according to a first example;
Fig. 2 and Fig. 2a show components of an atomic orbital model kit according to a second example;
Fig. 3a and Fig. 3b illustrate assembling/disassembling the spherical base shown in Fig. 1, Fig. 1a, Fig. 2, and Fig. 2a.
Fig. 4 illustrates the handling of an atomic orbital model;
Fig. 5 illustrates the handling of an atomic orbital model when building a molecule;
Fig. 6 illustrates another aspect of handling the atomic orbital model when building a molecule;
Fig. 7 illustrates a molecule built with the atomic orbital model;
Fig. 8 shows a system for augmenting a view of the model; and
Fig. 9 illustrates a step of a method that may be performed when handling the model.

Notably, the drawings are not drawn to scale and unless otherwise indicated, they are merely intended to conceptually illustrate the structures and procedures described herein.

### Description of Embodiments

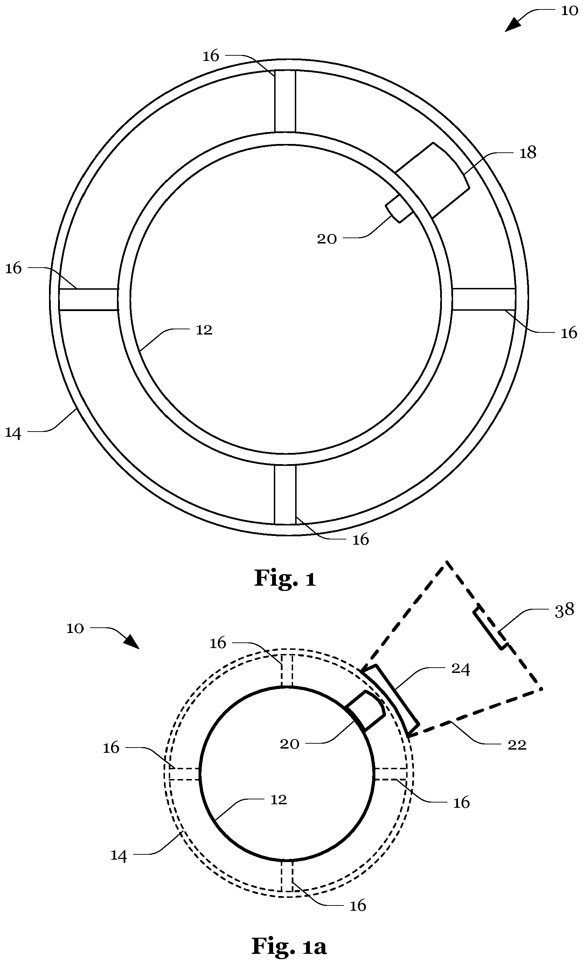

Fig. 1 shows a cross-sectional view of a spherical base 10 of an atomic orbital model kit. The spherical base 10 comprises an inner sphere 12 and an outer sphere 14 that are connected by rods or bars 16 which extend radially outwards from the surface of the inner sphere 12. The spherical base 10 further comprises a magnetic element 18 (e.g., a magnet) which is slidably arranged in between the inner sphere 12 and the outer sphere 14. The spherical base 10 further comprises another magnetic element 20 (e.g., a ferromagnetic element) which is arranged inside the inner sphere 12 to keep the magnetic element 18 in place. I.e., both magnetic elements 18, 20 may be placed close to each other such that the mutual attraction of both magnetic elements 18, 20 pulls the magnetic elements 18, 20 (from opposite sides) against the inner sphere 12.

As schematically illustrated in Fig. 1a by broken lines, the outer sphere 14 and the rods or bars 16 may be made (at least partially) of a transparent or translucent material to better reflect the nature of the s-orbital which is delimited by the outer sphere 14. As shown in Fig. 1a, the atomic orbital model kit may further comprise an (at least partially) transparent or translucent hollow body 22 with a magnetic element 24 (e.g., a ferromagnetic element) which allows attaching the first hollow body 22 to the outer sphere 14 by magnetic force. The spherical base 10 and the hollow body 22 may be made of a light-weight material such as plastic to facilitate handling. For instance, the transparent or translucent components may be made of acrylic glass.

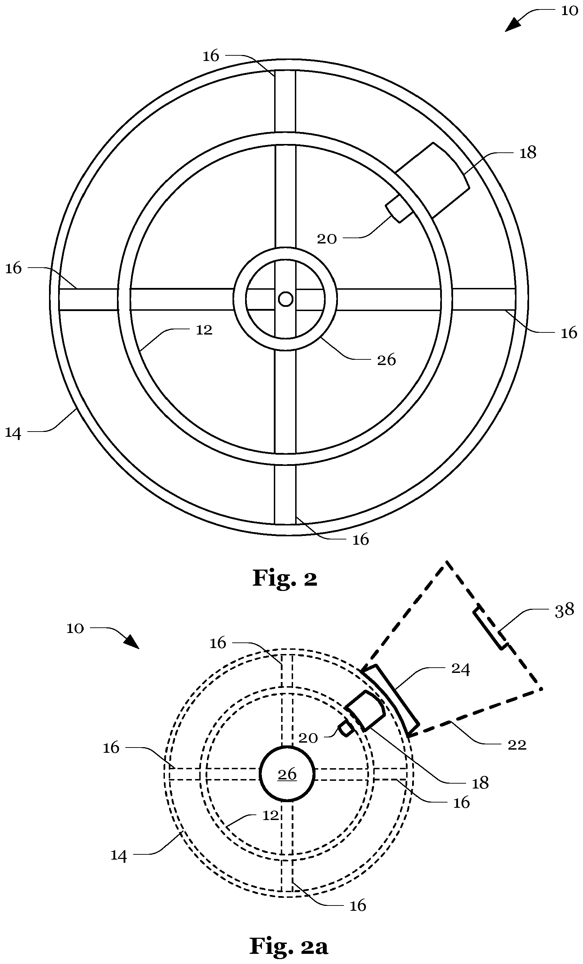

Fig. 2 and Fig. 2a illustrate a modification of the spherical base 10 shown in Fig. 1 and Fig. 1a, wherein the modified spherical base 10 comprises a core 26 that is arranged at the center of the spherical base 10 and connected to the inner sphere 12 by rods or bars 16 which extend radially outwards from the surface of the core 26. As indicated by the broken lines in Fig. 2a, the inner sphere 12 of the modified spherical base 10 may be (at least partially) transparent or translucent to make the core 26 visible from outside.

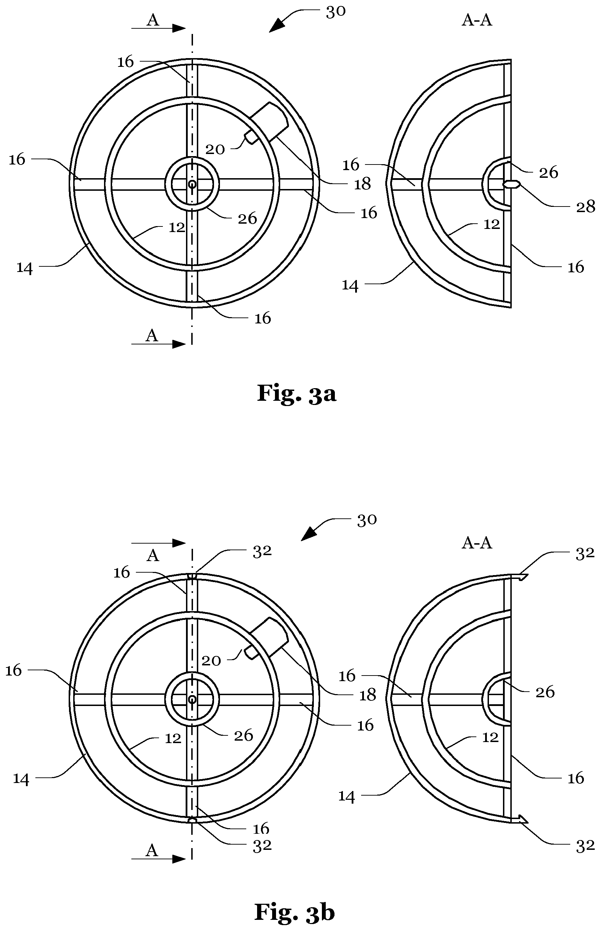

Fig. 3a and Fig. 3b illustrate how the spherical base 10 might be assembled/disassembled. For example, as shown in Fig. 3a, the core 26 may be assembled from two (identical) halves which are provided with internal threads that allow connecting the halves by a threaded rod 28. The threaded rod 28 allows dividing the spherical base 10 into two (identical) halves 30 by rotating the halves 30 relative to each other and removing the threaded rod 28. As shown in Fig. 3b, the outer sphere 14 may alternatively be provided with hooks 32 (or beads, or bumps) that engage with catches (not shown) when the spherical base 10 is assembled. When disassembling the spherical base 10, the hooks 32 (or beads, or bumps) may be bent outwardly until the hooks 32 (or beads, or bumps) disengage with the catches and the halves 30 can be pulled apart. Once disassembled, a magnetic element 18, 20 may be removed from, or added to the spherical base 10, or a magnetic element 18, 20 may be replaced by a stronger or weaker magnetic element.

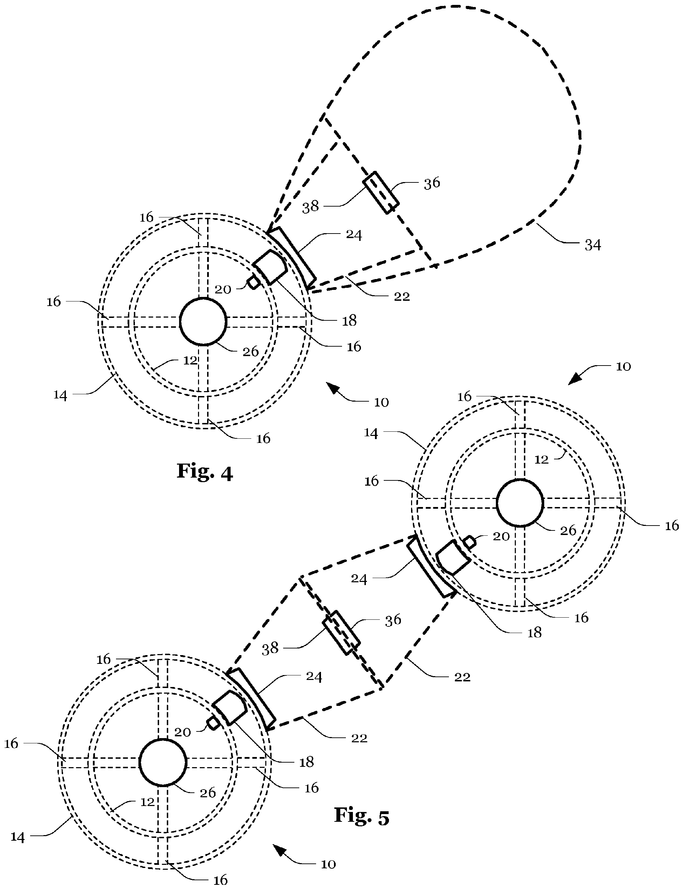

Fig. 4 illustrates another component 34 of the atomic orbital model kit, which may be used to model a free electron pair. The component 34 comprises a hollow structure and a magnetic element 36 within the hollow structure, wherein the magnetic element 36 is arranged at a (flat) surface of the structure. The (flat) surface matches a (flat) surface of the first hollow body 22 which comprises another magnetic element 38 that may be used to attach the component 34 to the first hollow body 22 by magnetic force. The component 34 may be at least partially transparent or translucent and/or provided with a color indicating the presence of a free electron pair.

Fig. 5 illustrates building a molecule from two atomic orbital models 10 which are connected through two hollow bodies 22 representing orbitals. I.e., the component 34 shown in Fig. 4 may be replaced by another hollow body 22 which is attached to another spherical base 10. This allows modelling more complex structures involving a multitude of atoms (and orbitals).

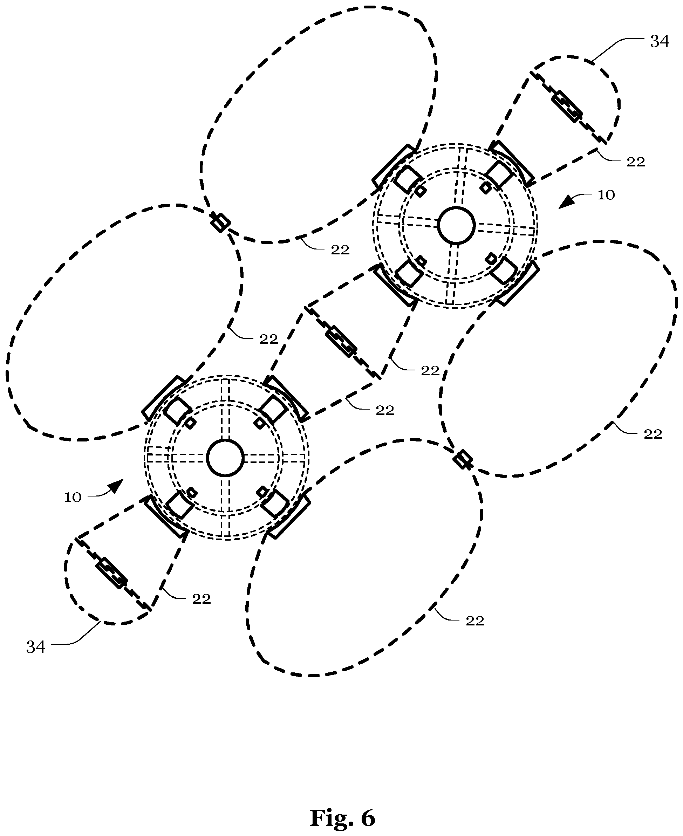

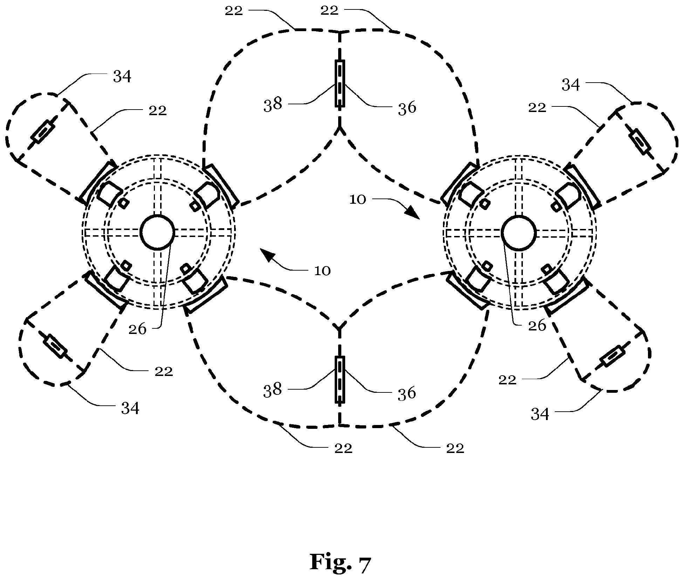

As shown in Fig. 6 and Fig. 7, the hollow bodies 22 may be made of an elastic material such that the hollow bodies 22 can be bent. The ability to bend a hollow body 22 increases the possibilities to model different chemical structures. For example, a user may be required to bend the hollow bodies 22 in order to model certain molecule structures.

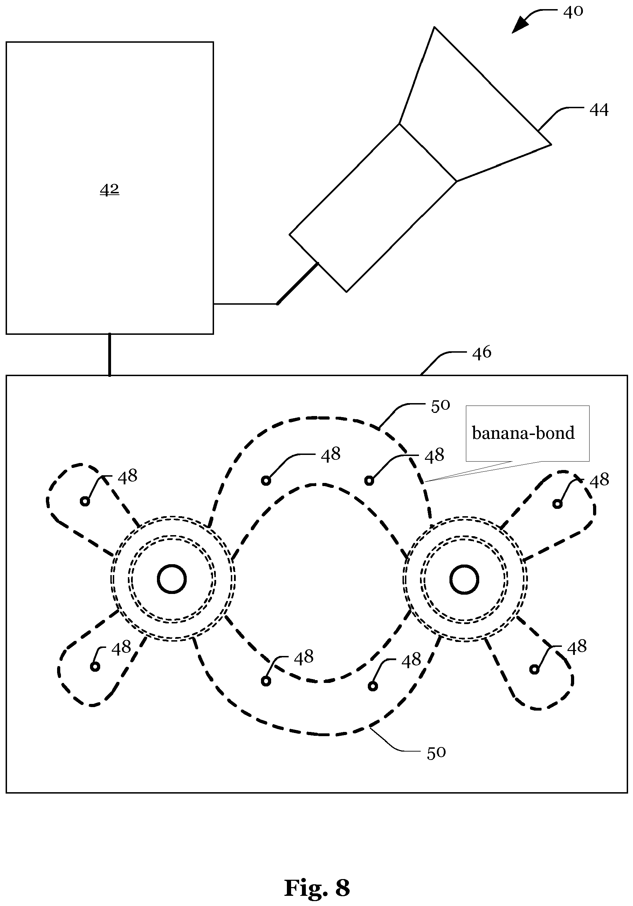

Fig. 8 shows a system 40 for augmenting a view of the model. The system 40 comprises a computing device 42 with a camera 44 and a screen 46. The computing device 42 detects at least some of the components that establish the atomic orbital model, displays the detected components on the screen 46 and removes magnetic elements 36, 38 from the displayed video or image. For example, the computing device 42 may be configured to display a virtual electron 48 (i.e., a representation of an electron) for each removed magnetic element 36, 38 (not shown). This allows correcting the position of the magnetic elements 36, 38 (which represent electrons) in view of the static position of the magnetic elements 36, 38 at the periphery of the hollow bodies 22. Moreover, the hollow bodies 22 may be replaced with virtual orbitals 50 that are derived from a virtual atomic orbital model to which the detected components can be matched. Furthermore, textual explanations ("banana-bond") or other graphics may be added to the view. In addition, an audio signal of a presenter handling the atomic orbital model may be recorded.

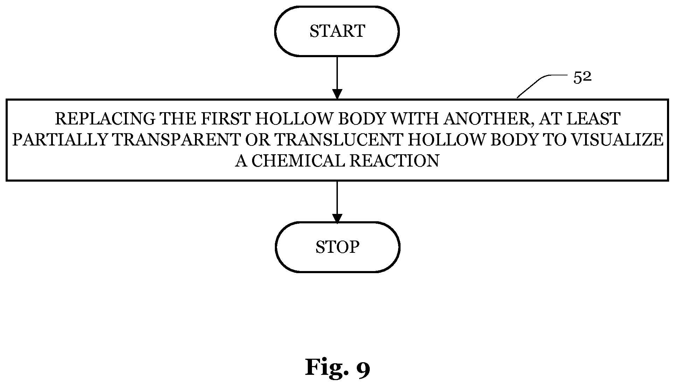

Fig. 9 illustrates a step of a process that may be performed when handling the model. The process starts at step 52 with replacing the first hollow body 22 with another, at least partially transparent or translucent hollow body 22 to visualize a chemical reaction. Before step 52, preparatory actions may be taken. For example, an atom or molecule may be built by attaching hollow bodies 22 (which represent orbitals) to the spherical base 10 and/or connecting hollow bodies 22 to build a molecule.

### Reference signs list

- 10: spherical base
- 12: inner sphere
- 14: outer sphere
- 16: rod/bar
- 18: magnetic element
- 20: magnetic element
- 22: body
- 24: magnetic element
- 26: core
- 28: threaded rod
- 30: half
- 32: hook
- 34: component
- 36: magnetic element
- 38: magnetic element
- 40: system
- 42: computing device
- 44: camera
- 46: screen
- 48: virtual electron
- 50: virtual orbital
- 52: process step

## Claims

1. An atomic orbital model kit, comprising:
a spherical base (10) with an inner sphere (12), an at least partially transparent or translucent outer sphere (14), and a first magnetic element (18) which is slidably arranged in between the inner sphere (12) and the outer sphere (14); and
a first, at least partially transparent or translucent hollow body (22) with a second magnetic element (24) which allows attaching the first hollow body (22) to the outer sphere (14) by magnetic force.

2. The kit of claim 1, further comprising a core (26) within the inner sphere (12), wherein the inner sphere (12) is at least partially transparent or translucent.

3. The kit of claim 2, wherein the core (26) comprises a sphere or an accumulation of elements representing subatomic particles.

4. The kit of claim 2 or 3, wherein the core (26) comprises a first part with a first internal thread, a second part with a second internal thread, and a threaded rod (28) which allows attaching the first part to the second part by rotating the first part relative to the second part.

5. The kit of any one of claims 1 to 4, wherein the spherical base (10) is dividable into a first half (30) and a second half (30) by rotating the halves (30) relative to each other around an axis through a center of the spherical base (10).

6. The kit of any one of claims 1 to 4, wherein the spherical base (10) is dividable into a first half (30) and a second half (30) by pulling the halves (30) apart.

7. The kit of any one of claims 1 to 6, wherein the spherical base (10) further comprises:
rods or bars (16) which extend radially outward from a surface of the core (26) and connect the core (26) and the inner sphere (12); and/or
rods or bars (16) which extend radially outward from a surface of the inner sphere (12) and connect the inner sphere (12) and the outer sphere (14).

8. The kit of any one of claims 1 to 7, further comprising a third magnetic element (20) which is arranged inside the inner sphere (12) to keep the first magnetic element (18) in place when the first hollow body (22) is detached from the outer sphere (14).

9. The kit of any one of claims 1 to 8, wherein the first hollow body (22) further comprises a fourth magnetic element (38) for connecting a second, at least partially transparent or translucent hollow body (22) to the first hollow body by magnetic force (22).

10. The kit of any one of claims 1 to 9, wherein the first hollow body (22) is flexible.

11. A system (40) comprising the kit of any one of claims 1 to 10 and a computing device (42) with a camera (44) and a screen (46), wherein the computing device (42) is configured to:
detect components of the kit that establish an atomic orbital model; and
display graphical elements representing the detected components on the screen (46).

12. The system (40) of claim 11, wherein the computing device (42) is configured to assign the detected components to a virtual atomic orbital model and to display the virtual atomic orbital model, wherein the virtual atomic orbital model comprises the graphical elements.

13. The system (40) of claim 11 or 12, wherein the computing device (42) is configured to record video data displayed on the screen (46).

14. The system (40) of any one of claims 11 to 13, wherein the computing device (42) is configured to record audio data of a presenter handling the atomic orbital model.

15. A method of visualizing a chemical reaction by handling the atomic orbital model kit of any one of claims 1 to 10 or the system (40) of any one of claims 11 to 14, the method comprising:
replacing (48) the first hollow body (22) with a third, at least partially transparent or translucent hollow body (22) to visualize a chemical reaction.

## Amended claims

### Amended claims in accordance with Rule 137(2) EPC.

1. An atomic orbital model kit,
**characterized in that**
the atomic orbital model kit comprises:
a spherical base (10) with an inner sphere (12), an at least partially transparent or translucent outer sphere (14), and a first magnetic element (18) which is slidably arranged in between the inner sphere (12) and the outer sphere (14); and
a first, at least partially transparent or translucent hollow body (22) with a second magnetic element (24) which allows attaching the first hollow body (22) to the outer sphere (14) by magnetic force.

2. The kit of claim 1, further comprising a core (26) within the inner sphere (12), wherein the inner sphere (12) is at least partially transparent or translucent.

3. The kit of claim 2, wherein the core (26) comprises a sphere or an accumulation of elements representing subatomic particles.

4. The kit of claim 2 or 3, wherein the core (26) comprises a first part with a first internal thread, a second part with a second internal thread, and a threaded rod (28) which allows attaching the first part to the second part by rotating the first part relative to the second part.

5. The kit of any one of claims 1 to 4, wherein the spherical base (10) is dividable into a first half (30) and a second half (30) by rotating the halves (30) relative to each other around an axis through a center of the spherical base (10).

6. The kit of any one of claims 1 to 4, wherein the spherical base (10) is dividable into a first half (30) and a second half (30) by pulling the halves (30) apart.

7. The kit of any one of claims 1 to 6, wherein the spherical base (10) further comprises:
rods or bars (16) which extend radially outward from a surface of the core (26) and connect the core (26) and the inner sphere (12); and/or
rods or bars (16) which extend radially outward from a surface of the inner sphere (12) and connect the inner sphere (12) and the outer sphere (14).

8. The kit of any one of claims 1 to 7, further comprising a third magnetic element (20) which is arranged inside the inner sphere (12) to keep the first magnetic element (18) in place when the first hollow body (22) is detached from the outer sphere (14).

9. The kit of any one of claims 1 to 8, wherein the first hollow body (22) further comprises a fourth magnetic element (38) for connecting a second, at least partially transparent or translucent hollow body (22) to the first hollow body by magnetic force (22).

10. The kit of any one of claims 1 to 9, wherein the first hollow body (22) is flexible.

11. A system (40) comprising the kit of any one of claims 1 to 10 and a computing device (42) with a camera (44) and a screen (46), wherein the computing device (42) is configured to:
detect components of the kit that establish an atomic orbital model; and
display graphical elements representing the detected components on the screen (46).

12. The system (40) of claim 11, wherein the computing device (42) is configured to assign the detected components to a virtual atomic orbital model and to display the virtual atomic orbital model, wherein the virtual atomic orbital model comprises the graphical elements.

13. The system (40) of claim 11 or 12, wherein the computing device (42) is configured to record video data displayed on the screen (46).

14. The system (40) of any one of claims 11 to 13, wherein the computing device (42) is configured to record audio data of a presenter handling the atomic orbital model.

15. A method of visualizing a chemical reaction by handling the atomic orbital model kit of any one of claims 1 to 10 or the system (40) of any one of claims 11 to 14, the method comprising:
replacing (48) the first hollow body (22) with a third, at least partially transparent or translucent hollow body (22) to visualize a chemical reaction.
